# EUROPÄISCHE PATENTANMELDUNG

(11) **EP 3 831 912 A1**
(43) Veröffentlichungstag der Anmeldung: **09.06.2021**
(21) Anmeldenummer: 20210899.9
(22) Anmeldetag: 01.12.2020
(51) Int. Cl.: C10B 49/02, C10B 53/02, F23G 5/027, F23B 90/06, F23D 14/24

(54) **VERFAHREN UND VORRICHTUNG ZUM VERBRENNEN VON FESTEN BRENNSTOFFEN**

(30) Priorität: 03.12.2019 DE 102019218806
(71) Anmelder: FRAUNHOFER-GESELLSCHAFT zur Förderung der angewandten Forschung e.V., 80686 München (DE)
(72) Erfinder: ALEYSA, Mohammadshayesh, 70569 Stuttgart (DE)
(74) Vertreter: Friese Goeden Patentanwälte PartGmbB

(57) **Zusammenfassung**

Die Anmeldung betrifft ein Verfahren zum Verbrennen von festen Brennstoffen, umfassend die folgenden Verfahrensschritte: Verbrennen des festen Brennstoffes in einer ersten Kammer (11), wodurch ein Pyrolysegas erhalten wird, Nachverbrennen des Pyrolysegases in einer zweiten Kammer (12), wodurch ein Abgas entsteht, wobei zumindest ein Teil des Abgases nach dem Nachverbrennen abgezweigt und der ersten Kammer (11) zugeführt wird. Weiterhin betrifft die Erfindung eine Feststofffeuerungsanlage (1), enthaltend ein Gehäuse (10), welches durch zumindest eine Innenwand in zumindest eine erste Kammer (11) und zumindest eine zweite Kammer (12) unterteilt ist, wobei die erste Kammer (11) dazu eingerichtet ist, zumindest einen Brennstoff zu pyrolysieren und das entstandene Pyrolysegas der zweiten Kammer (12) zuzuführen und die zweite Kammer dazu eingerichtet ist, das Pyrolysegas nachzuverbrennen, wodurch ein Abgas gebildet wird, wobei die Feststofffeuerungsanlage (1) weiterhin eine Abgasleitung (122) aufweist, durch welche zumindest ein Teil des Abgases in die erste Kammer (11) rückführbar ist.

## Beschreibung

Die vorliegende Erfindung betrifft ein Verfahren zum Verbrennen von festen Brennstoffen und eine Vorrichtung zum Verbrennen von festen Brennstoffen.

Die Bereitstellung von ökonomischen und ökologischen Quellen zur sicheren Energieversorgung in Deutschland ist ein wesentliches politisches Ziel und stellt eine der höchsten Prioritäten der Energiewirtschaft in Deutschland dar. Regenerative Energiequellen, vor allem Biomasse, sollen einen erheblichen Beitrag zur Deckung des Energiebedarfs besonders angesichts der kommenden Energiewende in Deutschland leisten. Biomasse ist ein wichtiger und vielseitig erneuerbarer Energieträger und lässt sich in fester, flüssiger und gasförmiger Form energetisch verwerten, wodurch die Biomasse nicht nur maßgeblich zum Klimaschutz durch eine bedeutsame Reduzierung der Treibhausgasemissionen, sondern auch zur Realisierung der nationalen Nachhaltigkeitsziele beitragen kann.

Der Ausbau der thermischen Verwertung der Biomasse in dezentralen Heizkesseln stellt eine wichtige Methode dar, die für die Versorgung von Haushalten und vielen Gewerbebetrieben mit Wärme und Warmwasser sowie Strom zunehmend verwendet wird. Diese Methode soll eine ausschlaggebende Rolle bei der Klimaschutzpolitik sowie bei der Nachhaltigkeitsstrategie in Deutschland spielen. Die verstärkte energetische Nutzung der Biomasse darf anderseits nicht zur Erhöhung der klimarelevanten und gesundheitsschädlichen Emissionen führen und erfordert daher die Entwicklung von innovativen Verbrennungstechnologien mit reduzierten Emissionen.

Zur dezentralen thermischen Verwertung der Biomasse kommen Verbrennungstechnologien bzw. Biomasseheizkessel mit einer thermischen Leistung bis 200 kW zum Einsatz, bei dem eine Abgasreinigung zur Einhaltung der Emissionsanforderungen notwendig ist. Eine Abgasreinigung ist mit hohem technischem Aufwand und Kosten verbunden. Sollten keine entsprechenden Verbrennungstechnologien ohne zusätzliche Abgasreinigung verwendet werden, wird die thermische Nutzung der Biomasse massiv eingeschränkt und somit der Beitrag der Biomasse zum Klimaschutz und zur Nachhaltigkeitsstrategie stark limitiert.

Der Verbrennungsvorgang in herkömmlichen automatisch beschickten Biomasseheizkesseln findet direkt und einstufig bzw. in einem Feuerraum statt, wobei eine große Verbrennungsluftmenge als Primärluft (entspricht > 68 % der gesamten Verbrennungsluftmenge) in das Glutbett zugegeben wird. Dies führt zu den folgenden Problemen hinsichtlich der Verbrennungsqualität und der Effizienz: Es erfolgt eine ständige Überschreitung von Emissionsgrenzwerten im Praxisbetrieb aufgrund des Mitreißens großer Mengen staubförmiger Bestandteile mit dem Abgas während der Verbrennung, welche beim Wärmeübertrager zu einer Effizienzverschlechterung führt. Außerdem führt die Zufuhr einer großen PrimärluftPrimärluftmenge in das Glutbett zur Bildung von vielen gas-(NO, NO₂, SO₂, Dioxine und Furane) und staubförmigen (Metalloxide und Salze) Emissionen, sodass die Konzentrationen der sauren Salzluftkomponente und des Feststoffs (< 1 µm) im Abgas enorm ansteigen. Die Abhängigkeit der Brennstoffzufuhr mit der Verbrennungsregelung führt in einer unsystematischen Weise sowohl zur drastischen Verschlechterung der Verbrennungseffizienz im Praxisbetrieb als auch zu erhöhten Emissionen.

Ausgehend vom Stand der Technik liegt der Erfindung somit die Aufgabe zugrunde, ein Verfahren und eine Vorrichtung zum Verbrennen von festen Brennstoffen bereitzustellen, wobei Emissionen reduziert werden.

Die Aufgabe wird erfindungsgemäß durch das Verfahren nach Anspruch 1 und die Vorrichtungen nach Anspruch 10 und 11 gelöst. Vorteilhafte Weiterbildungen der Erfindung finden sich in den Unteransprüchen.

Erfindungsgemäß wird ein Verfahren zum Verbrennen von festen Brennstoffen vorgeschlagen, das die folgenden Verfahrensschritte umfasst: Verbrennen bzw. Pyrolysieren des festen Brennstoffs in einer ersten Kammer bzw. Pyrolysekammer, wodurch ein Pyrolysegas erhalten wird, Nachverbrennen des Pyrolysegases, wodurch ein Abgas entsteht, wobei zumindest ein Teil des Abgases nach dem Nachverbrennen abgezweigt und der Pyrolysekammer zugeführt wird.

Beim erfindungsgemäßen Verfahren handelt es sich also um eine zweistufige Verbrennung mit Abgasrückführung zum Betrieb der Verbrennung im Pyrolyseschritt.

In einer Ausführungsform kann das Nachverbrennen in der Pyrolysekammer oder in einer davon räumlich getrennten Nachverbrennungseinrichtung erfolgen.

In einer Ausführungsform umfasst die Nachverbrennungseinrichtung eine Nachverbrennungskammer und ggf.eine Nachbehandlungsstufe, in die das Abgas eingeleitet und danach ggf. in einen optionalen Wärmetauscher geführt wird. Demzufolge kann zumindest ein Teil des Abgases nach dem Nachbehandlungsschritt und/oder nach dem Wärmetausch abgezweigt und der Pyrolysekammer zugeführt werden. In einer Ausführungsform kann es sich bei der Nachbehandlungsstufe um Platten aus Metall mit Turbolatoren oder um ein kegelförmiges Einbauelement mit einer innenliegenden Spirale handeln.

In einigen Ausführungsformen der Erfindung kann die Nachverbrennungskammer eine Zyklonbrennkammer sein oder eine solche Zyklonbrennkammer enthalten. Hierdurch kann die Verbrennung verbessert sein.

Wie bereits vorstehend ausgeführt wurde, erfolgt die Verbrennung der festen Brennstoffe in zwei Stufen. In der ersten Stufe wird der feste Brennstoff in einer Pyrolysekammer pyrolysiert, wodurch ein Pyrolysegas erhalten wird. Durch die Abgasrückführung erfolgt diese Verbrennung bei einem deutlich verminderten Sauerstoffanteil im Vergleich zum Sauerstoffanteil in der Luft. Dies kann erreicht werden, indem das abgezweigte Abgas eine Temperatur von mehr als etwa 200°C, wie etwa 400°C bis 600°C, beispielsweise etwa 500°C bis etwa 600°C, wie etwa 550°C (die Temperatur kann innerhalb dieser Grenze variieren und muss nicht zwingend konstant gehalten werden; je höher der Gehalt an Sauerstoff in dem zurückführten Abgas ist, umso niedriger kann die Temperatur eingestellt werden) und einen Sauerstoffgehalt von bis zu 12 Vol.-%, wie bis zu 10 Vol.-% aufweist. Je höher die Temperatur des zugeführten Abgases ist, umso niedriger sollte sein Gehalt an Sauerstoff eingestellt werden. Der Gehalt an Sauerstoff in dem zurückgeführten Abgas muss nicht konstant sein, sondern kann dynamisch innerhalb der angegebenen Grenze so eingestellt sein, so dass der Verbrennungsprozess sowohl stabil als auch schadstoffarm abläuft. Somit unterscheidet sich dieses abgezweigte Abgas, das dem Hauptabgasstrom entnommen wird, von Luft, welche einen Sauerstoffanteil von etwa 21 Vol.-% bis etwa 16 Vol.-% und eine Temperatur von < 25°C aufweist. Diese Bedingungen für das abgezweigte Abgas können, falls erforderlich, durch die Zugabe von Primärluft mit einem Sauerstoffanteil von 21 Vol.-% und einer Temperatur von weniger als 25°C eingestellt werden, falls das abgezweigte Abgas nach dem Abzweigen die vorstehenden Eigenschaften nicht erfüllt. Wird das abgezweigte Abgas direkt nach dem Nachbehandlungsschritt und vor dem Wärmetauscher abgezweigt, dann kann dies durch einen aktiven Transport, beispielsweise mittels üblicher Sauggebläse, erfolgen. Wird das abgezweigte Abgas vom Hauptabgasstrom nach dem Wärmetauscher und nach dem Saugzuggebläse des Heizkessels abgeführt, dann ist hierzu nicht zwingend ein Gebläse erforderlich, sondern kann automatisch erfolgen.

Das durch den Pyrolyseprozess in der Pyrolysekammer produzierte energiereiche Pyrolysegas wird nachfolgend einer Nachverbrennungseinrichtung zugeführt, so dass es nachverbrannt wird. Bei dieser Nachverbrennung wird es nahezu vollständig oxidiert. Beispielsweise kann dazu vorgewärmte Sekundärluft mit einer Temperatur von etwa 25°C bis etwa 300°C, z. B. etwa 100°C bis etwa 250°C, wie etwa 200°C, zugeführt werden. Diese Sekundärluft kann üblicherweise einen Sauerstoffgehalt bis zu 21 Vol.% enthalten. Ferner können in einer Ausführungsform gleichzeitig Staubpartikel (> 10 µm, die Bestimmung der Partikelgröß kann gravimetrisch oder durch eine Staubzählmethode, wie Kaskadenimpaktor, erfolgen) unter Einwirkung von Fliehkräften und/oder Begünstigung von Agglomerationseffekten abgetrennt werden. Dies kann durch vorstehende Nachbehandlungsstufe erreicht werden.

Für die Nachverbrennungskammer können an sich bekannte Zyklonbrennkammern verwendet werden. In diesem Fall enthält die Nachverbrennungskammer eine solche Zyklonbrennkammer und die Nachbehandlungsstufe. Eine solche Zyklonbrennkammer dient zugleich als Brennkammer und als Feinstaubabscheider. Hierdurch kann einerseits eine effiziente Vermischung von Brenngas und Oxidationsmittel erreicht werden, sodass bei der Verbrennung geringere Schadstoffkonzentrationen entstehen. Darüber hinaus wird eine schnelle Belegung des Wärmeübertrags von Feinstaub bzw. Verbrennungsasche vermieden. Hierdurch entsteht ein besserer Wärmeaustausch und ein höherer Kesselwirkungsgrad über eine längere Betriebszeit, ohne notwendige Kesselreinigung durch den Bediener. Die Zyklonbrennkammer gewährleistet dabei gegenüber metallischen und keramischen Pall-Ringen eine deutliche Verlängerung der Verweilzeit des Brenngases und des Oxidationsmittels in der Kammer sowie eine effektive mechanische Abscheidung der Stäube.

Einer Zyklonbrennkammer kann Pyrolysegas und ein Oxidationsmittel (Sekundärluft) zugeführt werden. Innerhalb der Zyklonbrennkammer wird das Pyrolysegas mit dem Oxidationsmittel exotherm umgesetzt, sodass Wärme freigesetzt wird. Diese Wärme kann nachfolgend an einen Wärmetauscher abgegeben werden, um auf diese Weise ein Wärmeträgermedium zu erwärmen. Das Wärmeträgermedium kann dazu eingesetzt werden, Wärme zu einem Wärmeverbraucher zu transportieren. Der Wärmeverbraucher kann beispielsweise die Raumheizung eines Gebäudes sein. Ferner kann die Wärme für Trocknungsprozesse in der industriellen Fertigung oder in der Landwirtschaft verwendet werden.

Durch die Form der Zyklonbrennkammer entstehen Turbulenzen, welche zur intensiven Durchmischung des Pyrolysegases und des Oxidationsmittels führen. Hierdurch kann vermieden werden, dass durch unvollständige Oxidation beim Abbrand eine hohe Schadstoffkonzentration entsteht. Die in der Zyklonbrennkammer entstehenden Turbulenzen können weiterhin bewirken, dass Feinstäube, insbesondere Ruß, feindispergiert und oxidiert werden. Alternativ oder zusätzlich können Feinstäube und Asche an den Wänden der Zyklonbrennkammer abgeschieden werden, sodass diese im Rahmen der Wartung oder des Austausches der Zyklonbrennkammer einfach entfernt werden können und nachfolgende Komponenten einer Feuerungsanlage nicht verschmutzen.

In einer Ausführungsform kann die Wärme des abgezweigten Abgases dazu benutzt werden, um die Temperatur der Sekundärluft für die Nachverbrennung, z.B. in der Nachverbrennungseinrichtung, auf etwa 25°C bis etwa 300°C, wie etwa 100°C bis etwa 250°C, wie etwa 200°C zu erwärmen. Dies kann über einen an sich bekannten Gas-Gas-Wärmetauscher erfolgen.

Als fester Brennstoff, der im erfindungsgemäßen Verfahren verbrannt werden kann, kann beispielsweise genannt werden Biomasse, insbesondere Holz, Scheitholz, Holzpellets, landwirtschaftliche Produktionsabfälle, Tierdung, organische Abfallstoffe, Schüttgut, Miscanthus, Getreide, Triticale, Gerste, Hackgut und Trester.

Durch die Verbrennung in der Pyrolysekammer mit heißem Abgas und geringem Sauerstoffgehalt (O₂ < etwa 16 Vol.-%, wie etwa < 12 Vol.-%, beispielsweise O₂ < 10 Vol.-%), wie sie vorstehend beschreiben wurde, wird die Anreicherung von Sauerstoff sowie die Erhöhung der Temperatur (> 750°C) im Glutbettbereich vermieden. Es wird darauf hingewiesen, dass der Sauerstoffgehalt dynamisch im zugeführten Abgas eingestellt werden kann, um eine schadstoffarme und stabile Verbrennung zu gewährleisten. Der Sauerstoffgehalt in dem zugeführten Abgas, welches als Vergasungsmittel verwendet wird, kann in Analogie zur Sekundärluft bzw. zum Sauerstoffüberschuss im Abgas automatisch eingestellt werden. Der Gehalt an Sauerstoff in dem zurückgeführten Abgas kann von dem Verbrennungskonzept, der Konstruktion des Heizkessels, der erforderlichen Wärmeleistung und den verbrennungstechnischen Eigenschaften des Brennstoffs abhängen. Es können zwei Lambda-Wert für die Regelung der Verbrennung definiert werden. Der erste Lambda-Wert (Sekundärluft-Lambda) entspricht dem Sauerstoffüberschuss im Abgas und wird mit der Sekundärluft geregelt. Bei dem zweiten lambda-Wert (Primärluft-Lambda wird die Intensität der Vergasung geregelt, wobei eine schadstoffarme und hoch effiziente Verbrennung gewährleistet werden kann. Dadurch wird die Entstehung von staub- und gasförmigen Emissionen, vor allem Feinstaub, NOₓ, SO₂, HCl, Dioxine und Furane vermieden. Ferner wird die Verbrennungseffizienz erhöht. Außerdem tritt keine Materialermüdung des Feuerraums aufgrund thermischer Belastung oder Schlackenbildung auf. Der geringe Anteil des Sauerstoffs im abgezweigten und rückgeführten Abgas hat weiterhin den Vorteil, dass der Verbrennungsprozess stabiler läuft und insbesondere nicht empfindlich gegenüber den Schwankungen der zugeführten Abgasmenge stattfindet. Bei einem geringeren Anteil an Sauerstoff werden sowohl die Reaktionsgeschwindigkeit als auch die Anzahl der laufenden Wärme produzierenden bzw. exothermen Reaktionen abnehmen bzw. sogar verhindert.

Obwohl der Pyrolyseprozess mit heißem Abgas, wie es vorstehend beschrieben wurde, betrieben wird, entstehen nur niedrigere Temperaturen von < 650°C im Glutbettbereich, die geringer sind als beim Betrieb mit Umgebungsluft und die deutlich unter der Ascheerweichungstemperatur vieler biogener Brennstoffe liegt (in der Regel kleiner 730 °C).

In einigen Ausführungsformen der Erfindung kann die Nachverbrennungseinrichtung und/oder eine damit ausgestattete Feststofffeuerungsanlage zumindest eine Elektrode oder ein Elektrodenpaar enthalten, welches dazu eingerichtet ist, eine dielektisch behinderte Entladung (DBE) zu ermöglichen. Hierzu kann im Entladungsspalt ein Dielektrikum angeordnet sein, welches in einigen Ausführungsformen der Erfindung ausgewählt ist aus einer Keramik oder Porzellan. Hierdurch können Ozon und/oder atomarer Sauerstoff mit hoher Effizienz aus Umgebungsluft erzeugt werden. Ozon und/oder atomarer Sauerstoff können sodann der Nachverbrennungseinrichtung zugeführt werden, d.h. entweder der Nachverbrennungskammer oder der Nachbehandlungsstufe oder beiden. Hierdurch kann die Oxidation verbessert und der Schadstoffgehalt reduziert werden.

In einigen Ausführungsformen der Erfindung kann die Entladung entweder in Form vieler Filamente oder als homogene Entladung ausgebildet sein, so dass sich die Entladung über das gesamte Entladungsvolumen oder einen Großteil des Volumens erstreckt. Die DBE hat die Wirkung, dass näherungsweise nur Elektronen beschleunigt werden, da die Entladungsdauer so gering ist, dass die schwereren Ionen, bedingt durch ihre Massenträgheit, nur wenig Impuls aufnehmen. Die Entladung erlischt, sobald das angelegte elektrische Feld von der vor dem Dielektrikum angesammelten elektrischen Ladung kompensiert wird. Die Zeitdauer einer Entladung kann im Bereich von einigen Nanosekunden liegen.

Zur Erzeugung einer DBE ist eine gepulste Anregung bzw. Das gepulste Anlegen einer Betriebsspannung an die zumindest eine Elektrode vorteilhaft. Die DBE kann mit uni- oder bipolaren Pulsen mit Pulsdauern von etwa 1 bis etwa 10 µs oder von etwa 20 ns bis etwa 900 ns betrieben werden. In einigen Ausführungsformen kann die Amplitude der Betriebsspannung zwischen etwa 2 kV und etwa 10 kV betragen. Das Puls-Pausenverhältnis kann kleiner als etwa 20% oder kleiner als etwa 15% oder kleiner als etwa 10% sein.

Beim erfindungsgemäßen Verfahren kann durch die Abgasrückführung komplett auf die Zufuhr von 100%iger Primärluft im Regelbetrieb verzichtet werden. Dadurch kann die gesamte Verbrennungsluft- bzw. Abgasmenge und somit die Wärmeverluste über das Abgas um mindestens 57 % reduziert werden. Diese Verluste machen bei modernen Heizkesseln bis zu 17 % der gesamten Kesselförderungsleistung aus. Die Konditionierung des Abgases auf die oben angesprochenen Temperaturen erfolgt beispielsweise durch einen Gas-Gas-Wärmeübertrager. Dieser Wärmeübertrager entzieht dem zurückgeführten Abgasteilvolumenstrom Wärme und überträgt sie an die Frischluft bzw. Sekundärluft, die der Nachverbrennungskammer, insbesondere der Zyklonbrennkammer, zugeführt werden kann.

Die gezielte Reduzierung des Sauerstoffangebots im Glutbettbereich durch die Abgasrückführung führt zu einer starken Verminderung von schadstoffbildenden chemischen Reaktionen. Ferner wird durch die Senkung der Temperaturen im Glutbettbereich auf < 750°C, die deutlich unter der Ascheerweichungstemperatur vieler biogener Brennstoffe liegt (in der Regel größer als 800°C), die Mobilisierung und die Konvertierung vieler im Brennstoff gebundener chemischer Elemente, wie Stickstoff zu Stickstoffmonoxid oder -dioxid, Schwefel zu Schwefeldioxid, Chlor zu Chlorwasserstoff, und somit im Ergebnis die gesamte Schadstoffemission gemindert. Ein Teil (bis zu 30 %) der thermisch behandelbaren Schadstoffkomponenten (CO, Kohlenwasserstoffe CₙHₘ, organische Feinstäube und sonstige Aerosole) werden mit dem zurückgeführten Teilvolumenstrom in die aktive Reaktionszone zurückgeführt und dort weiter verbrannt. Durch die zweistufige Verbrennung und die Abgasrückführung wird eine geringere Gesamtmenge benötigt bzw. durch das Glutbett strömen, wodurch das Mitreißen von Stäuben massiv gemindert wird.

Das erfindungsgemäße Verfahren kann die Verbrennung unterschiedlicher Brennstoffe bzw. Biomassen im gleichen Heizkessel als viele andere Brennstofftechniken ermöglichen. Ferner ist eine deutliche Reduzierung des CO₂-Ausstoßes im Praxisbetrieb mit dem erfindungsgemäßen Verfahren festzustellen. Ferner kann das erfindungsgemäße Verfahren für die Verbrennung feuchter Brennstoffe eingesetzt werden, da das zurückgeführte heiße Abgas die Aufheizung und folglich die Trocknung der zugeführten Brennstoffe beschleunigt. Es wurde kein Einfluss auf die CO-Bildung bei der Durchführung des erfindungsgemäßen Verfahrens beobachtet. Die Zyklonbrennkammer, wie sie vorstehend ausführlich beschrieben wurde, in Verbindung mit der vorstehend beschriebenen Nachbehandlungsstufe ermöglicht die Abscheidung von Feinpartikeln (bis zu 10 µm) und eine zumindest nahezu vollständige Oxidation durch die intensive Durchmischung und Verlängerung der aktiven Verweilzeit unabhängig von den Mengen des Gasgemisches. Außerdem wird dadurch eine schnelle Belegung des Wärmetauschers mit Verbrennungsasche vermieden, wodurch ein besserer Wärmetausch und somit hoher Wirkungsgrad über lange Zeit des Betriebs ohne nötige Reinigung der Wärmetauscherfläche gewährleistet wird. Die Schlackebildung durch die Senkung der Temperatur im Glutbettbereich wird vermieden, sodass auf die Kühlung von in den Feststoffförderungsanlagen gegebenenfalls vorliegenden Rosten verzichtet werden kann. Es werden keine flüssigen, pastöse oder feste Rückstände produziert. Die thermische Umsetzung des Brennstoffs erfolgt zu mehr als 98 % mit hoher Effizienz.

Die Emission vor allem folgender Bestandteile wird reduziert: organische Feinstäube, vor allem Ruß, organisch feinstoffbildende Aerosole, polyzyklische aromatische Kohlenwasserstoffe (PAK), flüchtige organische Verbindungen (VOC), Kohlenwasserstoffverbindungen (CₙHₘ) und Kohlenstoffmonoxid.

Gegenstand der vorliegenden Erfindung ist ferner eine Feststofffeuerungsanlage, die insbesondere zur Durchführung des vorstehend beschriebenen erfindungsgemäßen Verfahrens geeignet ist. Somit ergeben sich Details zur Konstruktion der Feststofffeuerungsanlage und die Funktionsweise einzelner Bauelemente auch aus der Beschreibung des erfindungsgemäßen Verfahrens.

Die Feststofffeuerungsanlage umfasstein Gehäuse, das durch Innenwände in eine erste Kammerunterteilt ist, die so ausgestaltet ist, dass darin Brennstoff pyrolysiert und das entstandene Pyrolysegas nachverbrannt wird, wodurch ein Abgas gebildet wird, und
eine Leitung zum Abführen des Abgases,
dadurch gekennzeichnet, dass
die Feststofffeuerungsanlage weiterhin eine Abgasleitung aufweist, durch die zumindest ein Teil des Abgases in die erste Kammer zurückgeleitet wird.

In einer Ausgestaltung umfasst die Feststofffeuerungsanlage
ein Gehäuse, das durch Innenwände in eine erste Kammer, die als Pyrolysekammer ausgestaltet ist, in eine zweite Kammer, und in eine dritte Kammer, die als Wärmetauscher ausgestaltet ist, unterteilt ist, wobei in der ersten Kammer fester Brennstoff pyrolysiert wird, wodurch ein Pyrolysegas entsteht,
einen Gaseinlass, durch den das Pyrolysegas von der ersten Kammer in die zweite Kammer geleitet wird,
eine Nachverbrennungskammer sowie ggf. ferner eine Nachbehandlungsstufe, die in der zweiten Kammer angeordnet sind, in der das Pyrolysegas nachverbrannt wird, und
eine Abgasleitung, über die zumindest ein Teil des Abgases in die erste Kammer zurückgeleitet wird.

Die Abgasleitung kann so ausgelegt sein, dass Abgas nach der zweiten Kammer und/oder nach der dritten Kammer abgeleitet und in die erste Kammer zurückgeleitet wird.

In einer Ausführungsformen weist die Feststofffeuerungsanlage ferner ein Ascheabführsystem auf, das sich im Bodenbereich der ersten Kammer, der zweiten Kammer und/oder der dritten Kammer befinden kann.

In einer Ausführungsform kann sich in der ersten Kammer ein Feuerrost und/oder eine Beschickungseinrichtung befinden, durch welche fester Brennstoff zugeführt werden kann.

In einer Ausführungsform ist die Nachverbrennungskammer eine an sich bekannte Zyklonbrennkammer. In diese wird das Pyrolysegas mit einem Oxidationsmittel, beispielsweise Umgebungsluft, umgesetzt. Das entstehende Abgas wird nachfolgend in die Nachbehandlungsstufe eingeleitet. Nach Durchtritt durch die Nachbehandlungsstufe dann das so entstandene Abgas zumindest teilweise über eine Abgasleitung in die erste Kammer zurückgeleitet werden.

Die dritte Kammer ist als Wärmetauscher ausgestaltet. Dort wird die im Abgas enthaltene Wärme an ein flüssiges oder gasförmiges Wärmeträgermedium abgeführt und zum Ort ihrer Verwendung transportiert.

Ferner kann zur Aufrechterhaltung des Abgasstromes in einer Ausführungsform ein Saugzuggebläse vorgesehen sein, damit der Abgasstrom durch die zweite Kammer und die dritte Kammer geführt werden kann.

Nachfolgend soll die Erfindung anhand von Figuren ohne Beschränkung des allgemeinen Erfindungsgedankens näher erläutert werden. Dabei zeigt
- Figur 1: einen Flowchart des erfindungsgemäßen Verfahrens.
- Figur 2: zeigt eine erste Ausführungsform der erfindungsgemäßen Vorrichtung.
- Figur 3: zeigt eine weitere Ausführungsform der erfindungsgemäßen Vorrichtung.

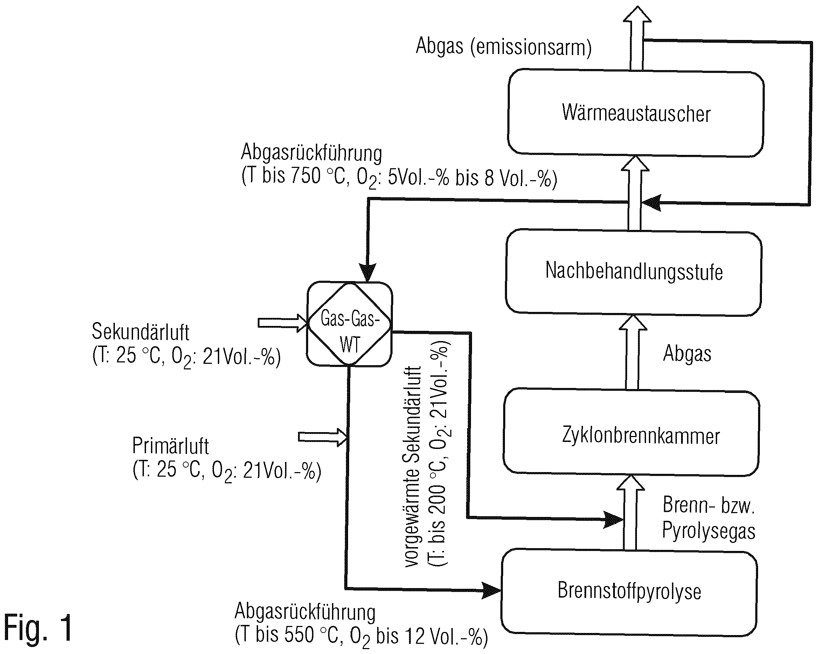

Im Schritt "Brennstoffpyrolyse" der Figur 1 wird fester Brennstoff verbrannt (pyrolysiert), wobei als Oxidationsmittel rückgeführtes Abgas eingesetzt werden kann. Dies weist eine Temperatur von bis zu 550°C auf. Im Vergleich zur Umgebungsluft mit 21 Vol.-% Sauerstoff ist das rückgeführte Abgas sauerstoffärmer. Der Sauerstoff-Gehalt liegt bei bis zu 12 Vol.-%. Das durch die Pyrolyse entstandene Brenn- bzw. Pyrolysegas wird einer Nachverbrennungskammer zugeführt, die z. B. als Zyklonbrennkammer ausgestaltet ist. In der Nachverbrennungskammer wird durch Zugabe von Sekundärluft mit einem Sauerstoffgehalt von 21 Vol.-% eine Nachverbrennung durchgeführt. Die Sekundärluft ist auf eine Temperatur von bis 200°C erwärmt. Das in der Zyklonbrennkammer entstandene Abgas wird einer Nachbehandlungsstufe zugeführt, in der eine Nachbehandlung erfolgt, beispielsweise in Form von kegelförmigen Einbauelementen mit innenliegenden Spiralen oder Platten aus Metallen mit Turbolatoren.

Das nach dem Durchfluss der Nachbehandlungsstufe erhaltene Abgas wird dem Wärmetauscher zugeführt und nach dem Austritt aus dem Wärmetauscher in üblicher Weise weiterverwendet. In der Figur 1 ist zu erkennen, dass das rückzuführende Abgas den Hauptabgasstrom entweder dem Abgas nach der Nachbehandlungsstufe oder dem Abgas nach dem Wärmetauscher entnommen werden kann. Dieses Abgas weist eine Temperatur von bis zu 750°C auf. Im Vergleich zur Umgebungsluft ist der Sauerstoffgehalt deutlich reduziert. Er kann 5 Vol.-% bis 8 Vol.-% betragen. Dieses rückzuführende Abgas kann mittels Primärluft hinsichtlich des Sauerstoffgehaltes angereichert und hinsichtlich der Temperatur reduziert sein. Dies bedeutet also, dass durch die Zufuhr von Primärluft das für die Brennstoffpyrolyse zu verwendendem Abgas so eingestellt werden kann, dass es die gewünschte Temperatur und den gewünschten Sauerstoffgehalt aufweist. Wie der Figur 1 ferner zu entnehmen ist, wird Sekundärluft in die Zyklonbrennkammer eingeleitet. Diese Sekundärluft stammt beispielsweise von der Umgebungsluft, sie weist aber eine im Vergleich dazu höhere Temperatur von bis zu 200°C auf. Um die Umgebungsluft auf diese erhöhte Temperatur zu bringen, wird die Temperatur des heißen Abgases, das rückgeführt werden soll, verwendet. Um die aus der Figur 1 erkennbaren Temperaturaustausche zu ermöglichen, kann ein Gas-Gas-Wärmetauscher eingesetzt werden.

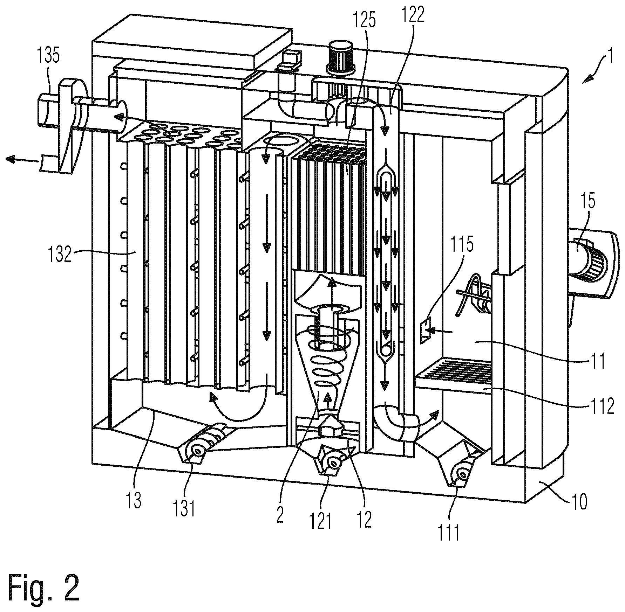

Die in Fig. 2 Feststofffeuerungsanlage 1 enthält ein Gehäuse 10, welches aus einem feuerresistenten Material gefertigt ist, beispielsweise einem Metall oder einer Legierung. Fallweise können die Wandungen des Gehäuses 10 auch mehrlagig ausgeführt sein und beispielsweise eine Wärmedämmung enthalten.

Durch Innenwände ist das Gehäuse 10 in eine erste Kammer 11, eine zweite Kammer 12 (die zweite Kammer ist optional und kann in einigen Ausführungsformen auch entfallen) und eine dritte Kammer 13 unterteilt. Im Bodenbereich der jeweiligen Kammern befinden sich zugeordnete Ascheabfuhrsysteme 111, 121 und 131 in Form jeweils einer Förderschnecke. Diese sind jedoch optional und können in anderen Ausführungsformen der Erfindung auch entfallen.

Die erste Kammer 11 ist als Pyrolysekammer ausgelegt. In der ersten Kammer 11 befindet sich daher ein Feuerrost 112 sowie eine Beschickungseinreichung 15, durch welche fester Brennstoff, wie beispielsweise Holzpellets, zugeführt werden kann. In anderen Ausführungsformen der Erfindung kann selbstverständlich auch Scheitholz, Biomasse oder jeder andere feste Brennstoff Verwendung finden. In diesen Fällen kann die Beschickungseinreichung 15 eine andere Bauform annehmen oder auch entfallen.

In der ersten Kammer 11 wird der zugeführte Brennstoff pyrolysiert, wobei ein Pyrolysegas entsteht. Das Pyrolysegas kann Kohlenstoff und/oder Kohlenmonoxid und/oder Wasserstoff und/oder Kohlenwasserstoffe enthalten oder daraus bestehen. Dieses Pyrolysegas wird durch den Gaseinlass 115 in die ggf. vorgesehene zweite Kammer geleitet.

Die zweite Kammer 12 enthält als Nachverbrennungskammer (2) eine Zyklonbrennkammer sowie eine Nachbehandlungsstufe 125. In der Zyklonbrennkammer wird das Pyrolysegas mit einem Oxidationsmittel, insbesondere Umgebungsluft, umgesetzt. Das entstehende Abgas wird in die Nachbehandlungsstufe 125 geleitet. Nach Durchtritt durch die Nachbehandlungsstufe 125 wird das so entstandene Abgas teilweise über eine Abgasleitung 122 in die erste Kammer 11 zurückgeleitet und dient dort der Pyrolyse des Brennstoffes. Ein anderer Teil des Abgases wird die dritte Kammer 13 geleitet, welche einen Wärmetauscher 132 enthält. Dort wird die im Abgas enthaltene Wärme an ein flüssiges oder gasförmiges Wärmeträgermedium abgeführt und zum Ort ihrer Verwendung transportiert.

Ein Saugzuggebläse 135 dient der Aufrechterhaltung des Abgasstromes durch die zweite Kammer 12 und die dritte Kammer 13.

Es sei darauf hingewiesen, dass die dargestellte Feststofffeuerungsanlage 1 lediglich beispielhaft zu verstehen ist. In anderen Ausführungsformen der Erfindung kann die Feststofffeuerungsanlage auch eine andere Bauform annehmen, so dass einige der genannten Bauteile anders ausgeführt sein können oder auch entfallen.

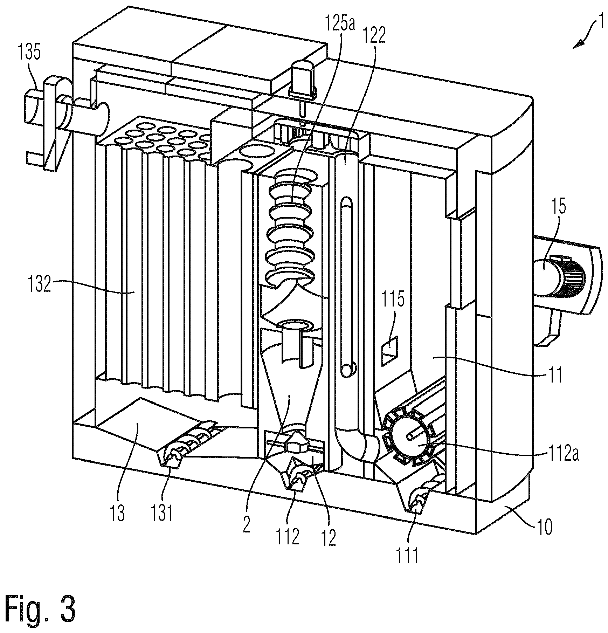

Figur 3 zeigt eine weitere Ausführungsform der Feststofffeuerungsanlage 1. Sie entspricht im Wesentlichen der Feststofffeuerungsanlage 1 aus Figur 2, sodass dieselben Bezugszeichen auch identische Bauteile bedeuten. Anders als die Feststofffeuerungsanlage aus Figur 2 enthält die Feststofffeuerungsanlage 1 aus Figur 3 einen Drehrost 112a sowie als Nachbehandlungsstufe einen kegelförmigen Einbau mit innenliegender Spiral 125a.

## Patentansprüche

1. Verfahren zum Verbrennen von festen Brennstoffen, umfassend die folgenden Verfahrensschritte:
Verbrennen des festen Brennstoffes in einer ersten Kammer (11), wodurch ein Pyrolysegas erhalten wird, Nachverbrennen des Pyrolysegases in einer zweiten Kammer (12), wodurch ein Abgas entsteht, wobei zumindest ein Teil des Abgases nach dem Nachverbrennen abgezweigt und der ersten Kammer (11) zugeführt wird.

2. Verfahren nach Anspruch 1, **dadurch gekennzeichnet, dass** das Nachverbrennen des Pyrolysegases in einer in der zweiten Kammer (12) angeordneten Zyklonbrennkammer (2) erfolgt.

3. Verfahren nach einem der Ansprüche 1 bis 2, **dadurch gekennzeichnet, dass** das Abgas in einen Wärmetauscher (132) geleitet wird und/oder
dass der abgezweigte Teil des Abgases nach einer Nachbehandlungsstufe (125) und/oder nach dem Wärmeübertrager (132) abgezweigt wird.

4. Verfahren nach einem der Ansprüche 2 oder 3, **dadurch gekennzeichnet, dass** die Zyklonbrennkammer (2) ein kegelförmiges Einbauelement mit innenliegender Spirale oder Platten mit Turbulatoren enthält oder daraus besteht.

5. Verfahren nach einem der Ansprüche 1 bis 4, **dadurch gekennzeichnet, dass** der abgezweigte Teil des Abgases, welcher der ersten Kammer (11) zugeführt wird, eine Temperatur von mehr als etwa 200°C oder etwa 400°C bis etwa 600°C oder etwa 500°C bis etwa 600°C aufweist und/oder
dass der abgezweigte Teil des Abgases, welcher der ersten Kammer (11) zugeführt wird, einen O₂-Gehalt bis etwa 16 Vol.% oder bis etwa 12 Vol.-% oder bis etwa 10 Vol.-% aufweist und/oder
dass die Temperatur und/oder der O₂-Gehalt des abgezweigten Teils des Abgases durch Zugabe von Primärluft eingestellt wird.

6. Verfahren nach einem der Ansprüche 1 bis 5, **dadurch gekennzeichnet, dass** zum Nachverbrennen Sekundärluft mit einer Temperatur von etwa 25°C bis etwa 300°C oder von etwa 100°C bis etwa 250°C oder von etwa 200°C zugeführt wird.

7. Verfahren nach Anspruch 6, **dadurch gekennzeichnet, dass** die Temperatur der Sekundärluft durch Zufuhr von Wärme aus dem abgezweigten Abgas eingestellt wird.

8. Verfahren nach einem der Ansprüche 1 bis 7, **dadurch gekennzeichnet, dass** in der Zyklonbrennkammer (2) Staubpartikel mit mehr als 10 µm Partikelgröße unter Einwirkung von Agglomeration und/oder Fliehkraft entfernt werden.

9. Verfahren nach einem der Ansprüche 1 bis 8, **dadurch gekennzeichnet, dass** der feste Brennstoff Biomasse enthält oder daraus besteht, insbesondere Holz, Scheitholz, Holzpellets, landwirtschaftliche Produktionsabfälle, Tierdung, organischen Abfallstoffe, Schüttgut, Miscanthus, Getreide, Triticale, Gerste, Hackgut und/oder Trester.

10. Feststofffeuerungsanlage (1), enthaltend ein Gehäuse (10), welches durch zumindest eine Innenwand in zumindest eine erste Kammer (11) und zumindest eine zweite Kammer (12) unterteilt ist, wobei die erste Kammer (11) dazu eingerichtet ist, zumindest einen Brennstoff zu pyrolysieren und das entstandene Pyrolysegas der zweiten Kammer (12) zuzuführen und
die zweite Kammer dazu eingerichtet ist, das Pyrolysegas nachzuverbrennen, wodurch ein Abgas gebildet wird, wobei die Feststofffeuerungsanlage (1) weiterhin eine Abgasleitung (122) aufweist, durch welche zumindest ein Teil des Abgases in die erste Kammer (11) rückführbar ist.

11. Feststofffeuerungsanlage (1) nach Anspruch 10, weiterhin enthaltend eine dritte Kammer (13) in welcher ein Wärmetauscher angeordnet ist.

12. Feststofffeuerungsanlage (1) nach Anspruch 10 oder 11, **dadurch gekennzeichnet, dass** im Bodenbereich der ersten Kammer (11), der zweiten Kammer (12) und/oder der dritten Kammer (13) jeweils ein Ascheabfuhrsystem (111, 121, 131) angeordnet ist.

13. Feststofffeuerungsanlage (1) nach einem der Ansprüche 10 bis 12, **dadurch gekennzeichnet, dass** sich in der ersten Kammer (11) ein Feuerrost (112) und/oder eine Beschickungseinrichtung (15) befindet.

14. Feststofffeuerungsanlage (1) nach Anspruch 11 bis 13, **dadurch gekennzeichnet, dass** in der zweiten Kammer (12) eine Zyklonbrennkammer (2) und/oder eine Nachbehandlungsstufe (125) vorhanden ist.

15. Feststofffeuerungsanlage (1) nach Anspruch 11 bis 14, weiterhin enthaltend ein Saugzuggebläse (135) zur Aufrechterhaltung des Abgasstroms durch die zweite Kammer (12) und die dritte Kammer (13).
